# EUROPÄISCHE PATENTSCHRIFT

(11) **EP 2 099 656 B1**
(45) Veröffentlichungstag und Bekanntmachung des Hinweises auf die Patenterteilung: **02.01.2013**
(21) Anmeldenummer: 07822773.3
(22) Anmeldetag: 21.11.2007
(51) Int. Cl.: B60R 21/217

(54) **GENERATORBAUGRUPPE FÜR EIN AIRBAGMODUL EINES KRAFTFAHRZEUGS**
GENERATOR ASSEMBLY FOR AN AIRBAG MODULE OF A MOTOR VEHICLE
UNITE DE GENERATEUR POUR UN MODULE D'AIRBAG D'UN VEHICULE AUTOMOBILE

(30) Priorität: 15.12.2006 DE 202006019196 U
(43) Veröffentlichungstag der Anmeldung: 16.09.2009
(73) Patentinhaber: Takata AG, 63743 Aschaffenburg (DE)
(72) Erfinder: GLÖCKLER, Oliver, 89278 Nersingen (DE)
(74) Vertreter: Baumgärtel, Gunnar
(86) Internationale Anmeldenummer: PCT/EP2007/062627
(87) Internationale Veröffentlichungsnummer: WO 2008/071525

(56) Entgegenhaltungen:
- EP-A- 1 559 620
- WO-A-02/00476
- DE-A1- 10 234 502
- DE-A1- 10 357 867
- DE-A1- 19 846 110
- DE-U1-202004 016 975

## Beschreibung

Die Erfindung betrifft eine Generatorbaugruppe für ein Airbagmodul eines Kraftfahrzeugs nach dem Oberbegriff des Anspruchs 1.

Eine derartige Generatorbaugruppe umfasst einen Gasgenerator zum Aufblasen eines eine Gassackhülle aufweisenden Gassackes des Airbagmodules mit Gas und Mittel zur elektrischen Isolierung des (ein metallisches Gehäuse aufweisenden) Gasgenerators gegenüber angrenzenden (metallischen) Bauelementen des Airbagmodules. Derartige Generatorbaugruppen sind beispielsweise aus den Druckschriften DE 102 34 502 A1 und DE 103 57 867 A1 bekannt.

Ein Airbagmodul, in dem die genannte Generatorbaugruppe Verwendung finden kann, dient zum Schutz von Fahrzeuginsassen in einem Crash-Fall. Hierzu ist der Gasgenerator des Airbagmodules mit einem oder mehreren Crash- und/oder Pre-Crash-Sensoren gekoppelt, die bei einer Crash-bedingten starken Fahrzeugverzögerung bzw. einem anhand von Sensordaten ermittelten bevorstehenden Crash eine Zündung des Gasgenerators bewirken, so dass dieser ein Gas zum Aufblasen des Gassackes freisetzt. Der zunächst in zusammengefaltetem bzw. zusammengerafftem Zustand im Airbagmodul vorgesehene Gassack entfaltet sich beim Aufblasen und bildet im aufgeblasenen Zustand ein Gaskissen, das einen oder mehrere Fahrzeuginsassen vor einem Auftreffen auf die Fahrzeugkarosserie schützen soll.

Um den Gasgenerator beim Auftreten eines mittels hierfür vorgesehener Sensoren detektierten (bevorstehenden) Unfalls auslösen zu können, ist jener in der Regel elektrisch, d.h., über elektrische Leitungen, mit einer Steuereinrichtung verbunden, die aufgrund entsprechender Sensorsignale eine Zündung des Gasgenerators bewirkt.

In vielen Anwendungsfällen wird hierbei angestrebt, den Gasgenerator, d.h., insbesondere ein metallisches Gehäuse des Gasgenerators, gegenüber angrenzenden (metallischen) Bauelenenten elektrisch zu isolieren, so dass eine notwendige Erdung des Gasgenerators ausschließlich gezielt erfolgt. Zur Isolierung eines Gasgenerators gegenüber umgebenden Bauteilen ist es bekannt, Montageteile und Befestigungselemente, die mit dem Gasgenerator, also insbesondere dessen (metallischem) Gehäuse, in Kontakt stehen, elektrisch isolierend auszubilden und beispielsweise mit angespritzten Kunststoffbereichen zu versehen. Dies bedingt allerdings einen erhöhten Aufwand bei der Fertigung und erfordert die Verwendung komplizierter Montageteile und Befestigungselemente.

Der Erfindung liegt daher das Problem zugrunde, eine Generatorbaugruppe der eingangs genannten Art zu schaffen, die sich bei einfachem Aufbau durch eine zuverlässige elektrische Isolierung des Gasgenerators auszeichnet.

Dieses Problem wird erfindungsgemäß durch die Schaffung einer Generatorbaugruppe mit den Merkmalen des Anspruchs 1 gelöst.

Zur elektrischen Isolierung des Gasgenerators ist eine flexible Materiallage, insbesondere in Form einer Gewebelage, vorgesehen, die den Gasgenerator (an einer Außenseite des Gasgenerators) entlang einer Umfangsrichtung vollständig umschließt. Die Erdung eines gegenüber umgebenden Bauteilen elektrisch isolierten Gasgenerators erfolgt durch eine Erdungsleitung, die einen (mehrpoligen) Steckerbereich des Gasgenerators kontaktiert, welcher auch zur Zündung des Gasgenerators mittels sensorgesteuerter elektrischer Signale dient.

Indem der Gasgenerator auf seiner durch ein (metallisches) Gehäuse gebildeten Außenseite von einer flexiblen Materiallage umgeben ist, wird ein unmittelbarer Kontakt benachbarter (metallischer) Bauelemente mit dem Gasgenerator verhindert, da ja die flexible Materiallage den Gasgenerator gegenüber solchem Kontakt abschirmt, indem sie zwischen der durch das (metallische) Generatorgehäuse gebildeten Außenseite des Gasgenerators und daran angrenzenden sonstigen Bauelementen liegt.

Vorteilhaft ist eine Ausführungsform, bei der die flexible Materiallage eine den Gasgenerator in Umfangsrichtung umgebende flexible Hülle bildet, die beispielsweise auf den zugeordneten Gasgenerator aufgeschoben werden kann.

Die erfindungsgemäße Anordnung zur Isolierung eines Gasgenerators ist z.B. geeignet zur Verwendung bei Gasgeneratoren, die sich entlang einer Achse erstrecken, wie z. B. einem so genannten Rohrgasgenerator, der eine im Wesentlichen zylindrische Mantelfläche aufweist, die sich zwischen einer ersten und einer zweiten stirnseitigen Deckfläche erstreckt. In einem solchen Fall kann eine (bei bestimmungsgemäßer Anordnung auf dem zugeordneten Gasgenerator) einen Hohlzylinder bildende, an mindestens einer Deckfläche offene Hülle aus einem flexiblen Material in einfacher Weise über den Gasgenerator gezogen werden.

Ein maximaler Schutz des Gasgenerators vor elektrischem Kontakt mit benachbarten Bauelementen wird dabei erreicht, wenn sich die flexible Materiallage bzw. Hülle entlang der Längsachse des Gasgenerators im Wesentlichen entlang der gesamten Länge des Gasgenerators erstreckt, so dass die Mantelfläche des Gasgenerators entlang ihrer gesamten Länge (also vollständig) von der flexiblen Materiallage bedeckt ist.

Bei der flexiblen Materiallage kann es sich einerseits um einen Abschnitt des mittels des Gasgenerators aufzublasenden Gassackes des Airbagmodules handeln, beispielsweise indem ein Abschnitt (Fortsatz) des Gassackes so ausgebildet ist, dass er den Gasgenerator zur Isolierung gegenüber benachbarten Bauelementen umgibt. Diese Anordnung ist zu unterscheiden von dem bekannten Fall, dass ein Gasgenerator innerhalb des hiermit aufzublasenden Gassackes angeordnet wird. Denn im letztgenannten Fall dient der den Gasgenerator umgebende Gassack nicht zur elektrischen Isolierung des Gasgenerators gegenüber benachbarten metallischen Bauteilen. Wesentlich für die flexible Materiallage gemäß der vorliegenden Erfindung ist nämlich, dass diese den Gasgenerator auch dann noch eng umfasst bzw. an diesem anliegt, um ihn vor unmittelbarem Kontakt mit benachbarten Bauelementen zu schützen, wenn der Gassack in einem Crash-Fall aufgeblasen wird und sich hierbei entfaltet. D.h. die flexible Materiallage umgibt den Gasgenerator (dauerhaft, d.h. auch beim Aufblasen des Gassackes) im Querschnitt im Wesentlichen konzentrisch; und die flexible Materiallage behält beim Aufblasen des Gassackes ihre ursprüngliche räumliche Lage (an der Außenseite des Gasgenerators) bei, ohne sich zu entfalten bzw. sich substanziell von dem Gasgenerator (speziell der ihr zugewandten Außenseite des Gasgenerators) zu entfernen, so dass ein von der flexiblen Materiallage definierter Hohlraum von dem Gasgenerator im Wesentlichen vollständig ausgefüllt wird.

Andererseits kann es sich bei der den Gasgenerator gegenüber seiner Umgebung isolierenden flexiblen Materiallage auch um eine vom Gassack separate Lage handeln, die nicht mit dem aufzublasenden Gassack verbunden ist. So kann die flexible Materiallage beispielsweise einen Bestandteil einer den Gassack im zusammengefalteten Zustand umgebenden Umhüllung bilden. Eine derartige Umhüllung dient dazu, den zu einem Gassackpaket zusammengefalteten bzw. zusammengerafften Gassack aufzunehmen, um das Verstauen des Gassackpaketes im Kraftfahrzeug zu erleichtern. Eine solche Umhüllung des Gassackes kann beispielsweise aus einer Folie bestehen, die beim Aufblasen und Entfalten des Gassackes zerreißt.

Es ist jedoch auch möglich, dass die den Gasgenerator gegenüber seiner Umgebung isolierende flexible Materiallage keinen Bestandteil einer anderen Komponente des Airbagmodules bildet, sondern als eine eigenständige Modulkomponente vorgesehen ist.

Die flexible Materiallage dient insbesondere dazu, einen unmittelbaren Kontakt der Oberfläche (Außenseite) des Gasgenerators mit Komponenten einer Halteeinrichtung zu verhindern, über die der Gasgenerator mit einem zugeordneten tragenden Kraftfahrzeugteil verbunden wird, um dessen Position innerhalb des Kraftfahrzeugs zu fixieren, wobei es sich bei dem tragenden Kraftfahrzeugteil auch um eine Komponente des Airbagmodules, etwa um ein Gehäuseteil des Airbagmodules, handeln kann. Die flexible Materiallage erstreckt sich hierzu zwischen dem Gasgenerator und der Halteeinrichtung, so dass ein unmittelbarer Kontakt des Gasgenerators mit der zugeordneten Halteeinrichtung, die aus Stabilitätsgründen regelmäßig aus Metall besteht, vermieden wird.

Die Halteeinrichtung kann beispielsweise einen den Gasgenerator zumindest teilweise umschließenden Klemmabschnitt umfassen, der mittels zugeordneter Klemmelemente am Gasgenerator festgeklemmt wird, wobei sich die flexible Materiallage zwischen dem Klemmabschnitt der Halteeinrichtung und der Außenseite des Gasgenerators erstreckt.

Weitere Einzelheiten und Vorteile der Erfindung werden bei der nachfolgenden Beschreibung von Ausführungsbeispielen anhand der Figuren deutlich werden.

Es zeigen:
- Fig. 1: einen Schnitt durch eine Gasgeneratorbaugruppe eines Airbagmodules für ein Kraftfahrzeug;
- Fig. 2: eine Abwandlung der Gasgeneratorbaugruppe aus Figur 1 in einem Schnitt.

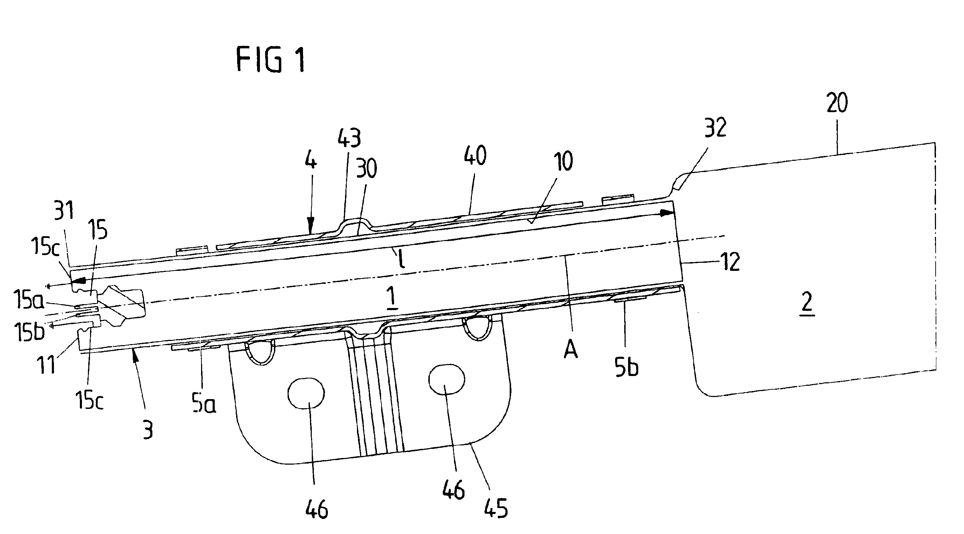

In Figur 1 sind von einem Airbagmodul für ein Kraftfahrzeug ein Gasgenerator 1, ein mittels des Gasgenerators in einem Crash-Fall aufzublasender Gassack 2 mit einer Gassackhülle 20, eine Gewebelage 3 zur elektrischen Isolierung des Gasgenerators 1 sowie eine dem Gasgenerator 1 zugeordnete Halteeinrichtung 4 dargestellt.

Bei dem Gasgenerator 1 handelt es sich um einen so genannten Rohrgasgenerator, der von einem rohrförmigen, im Wesentlichen höhlzylindrischen metallischen Gehäuse 10 umgeben ist und der sich mit diesem eine zylindrische Mantelfläche definierenden Generatorgehäuse 10 der Länge I zwischen einer ersten stirnseitigen Deckfläche 11 und einer zweiten stirnseitigen Deckfläche 12 entlang einer Achse A erstreckt.

Der Gasgenerator 1 dient zum Aufblasen des zugeordneten Gassackes 2 in einem Crash-Fall, indem die Hülle 20 des Gassackes 2 (Gassackhülle) mittels des Gasgenerators 1 mit Gas befüllt wird. Der Gassack 2 befindet sich dabei vorliegend beispielhaft vor der zweiten stirnseitigen Deckfläche 12 des Gasgenerators 1.

Von dem Gassack 2 steht in Richtung des Gasgenerators 1 ein als Fortsatz ausgebildeter Gassackabschnitt 3 ab, der eine den Gasgenerator 1 umschließende flexible Schutzhülle 30 bildet, die ebenso wie die Gassackhülle 20 aus einem Gewebe besteht bzw. genauer gesagt zusammen mit der Gassackhülle 20 aus einem geeigneten (einheitlichen) Gewebe gebildet ist.

Die den Fortsatz 3 des Gassackes 2 bildende flexible Schutzhülle 30 erstreckt sich ebenso wie der (rohrförmige) Gasgenerator 1 zwischen einer ersten Deckfläche 31 und einer zweiten Deckfläche 32, wobei die erste (offene) Deckfläche 31 der flexiblen Schutzhülle 30 die erste stirnseitigen Deckfläche 11 des Gasgenerators 1 umgibt und die zweite (ebenfalls offene) Deckfläche 32 der flexiblen Schutzhülle 3 an der zweiten stirnseitigen Deckfläche 12 des Gasgenerators 1 liegt und einen Übergang zu der Gassackhülle 20 ausbildet.

Konkret handelt es sich bei der flexiblen Schutzhülle 30 des Gasgenerators 1 um einen im Wesentlichen hohlzylindrischen Fortsatz des Gassackes 2, derart, dass die Gassackhülle 20 und die flexible Schutzhülle 30 einen gemeinsamen Hohlraum bilden und derjenige Bereich des Hohlraumes, der von der Gassackhülle 20 umschlossen wird, zum Befüllen mit Gas in einem Crash-Fall dient, während derjenige Bereich des Hohlraumes, der von der flexiblen Schutzhülle 30 umschlossen ist, der Aufnahme des Gasgenerators 1 dient, wobei die flexible Schutzhülle 30 das Generatorgehäuse 10 derart eng umschließt, dass die flexible Schutzhülle 30 am Generatorgehäuse 10 anliegt.

Hierdurch ist der Gasgenerator 1 bzw. dessen Gehäuse 10 gegenüber angrenzenden (metallischen) Bauelementen elektrisch isoliert. Dies gilt insbesondere für Komponenten einer Halteeinrichtung 4, über die der Gasgenerator 1 in einem Kraftfahrzeug in definierter Position fixierbar ist.

Die Halteeinrichtung 4 weist eine den Gasgenerator 1 ringförmig unter einem Winkel von weniger als 360°, jedoch bevorzugt unter einem Winkel von mindestens 180° umschließenden Klemmabschnitt 40 auf, der mittels zweier Kiemmelemente 5a, 5b in Form von Klemmringen am Gasgenerator 1 bzw. genauer an dessen Gehäuse 10 festgeklemmt ist. Dabei erstreckt sich die den Gasgenerator 1 umschließende flexible Hülle 30 zwischen dem Gehäuse 10 des Gasgenerators 1 einerseits und den besagen Komponenten 5a, 5b, 40 der Halteeinrichtung 4 andererseits, so dass diese typischerweise aus Metall bestehenden Bauteile keinen unmittelbaren Kontakt mit dem metallischen Generatorgehäuse 10 haben.

Der Klemmabschnitt 40 der Halteeinrichtung 4 weist zudem eine ringförmig umlaufende Erhebung 43 auf, in die eine Wulst des Generatorgehäuses 10 eingreifen kann, um den Klemmabschnitt 40 in axialer Richtung (entlang der Längsachse A des Gasgenerators 1) zu sichern.

Von dem Klemmabschnitt 40 der Halteeinrichtung 4 steht ein Verbindungsabschnitt 45 ab, über den der in dem Klemmabschnitt 40 der Halteeinrichtung 4 festgeklemmte Gasgenerator 1 an einem tragenden Kraftfahrzeugteil fixierbar ist, wozu in dem Verbindungsabschnitt 45 Befestigungsöffnungen 46 vorgesehen sind, die von geeigneten Befestigungsmitteln, z. B. in Form von Schrauben, durchgriffen werden können.

Da die flexible Schutzhülle 30 in ihrem Querschnitt an die ihr zugewandte äußere Kontur des Gasgenerators 1 angepasst ist und die Halteeinrichtung 4 den Gasgenerator 1 sowie die flexible Hülle 30 mit ihrem Klemmabschnitt 40 klemmend umfasst, liegt die flexible Hülle 30 am Gasgenerator 1, genauer an dessen durch das Generatorgehäuse 10 gebildeter Außenseite an, so dass die flexible Schutzhülle 30 durch den Gasgenerator 1 im wesentlichen vollständig ausgefüllt wird, und zwar auch dann noch, wenn die Gassackhülle 20 beim Aufblasen des Gassackes 2 mit Gas befüllt wird.

An seiner dem Gassack 2 abgewandten, ersten stirnseitigen Deckfläche 11 weist der Gasgenerator 1 einen Steckerbereich 15 auf, der den elektrischen Anschluss eines Steuergerätes ermöglicht, mit dem der Gasgenerator in Abhängigkeit von Ausgangssignalen eines oder mehrerer Crash- bzw. Pre-Crash-Sensoren auslösbar bzw. zündbar ist. Hierzu dienen elektrische Verbindungsleitungen (elektrische Kabel), die das dem Gasgenerator 1 zugeordnete Steuergerät in bekannter Weise mit dem Gasgenerator 1 elektrisch verbinden und die über Steckerelemente an den Steckerbereich 15 des Gasgenerators 1 anzuschiießen sind.

Bei dem Steckerbereich 15 des Gasgenerators 1 handelt es sich hier um einen mehrpoligen Steckerbereich, an den neben den elektrischen Verbindungsleitungen zu einem zugeordneten Steuergerät auch eine Erdungsleitung anschließbar ist, um den Gasgenerator erden zu können. Hierdurch wird in Kombination mit der Isolierung des Gasgenerators 1 durch die flexible Schutzhülle 30 eine gezielte, definierte Erdung des Gasgenerators 1 erreicht.

Konkret umfasst der Steckerbereich 15 des Gasgenerators 1 vorliegend drei Steckerelemente 15a, 15b, 15c, von denen zwei Steckerelemente 15a, 15b in Form von Steckerstiften zum elektrischen Anschluss des Gasgenerators 1 an ein zugeordnetes Steuergerät (über elektrische Verbindungsleitungen) vorgesehen sind und ein weiteres Steckerelement 15c zur Erdung des Gasgenerators 1 über eine an jenes Steckerelement 15c anzuschließende und hiervon abgehende Erdungsleitung dient, welche einer zentralen Fahrzeugerdung zugeführt wird. Das dritte Steckerelement 15c steht hierzu mit dem (metallischen) Gasgeneratorgehäuse 10 in elektrischem Kontakt und kann beispielsweise durch einen elektrischen Kontaktabschnitt an der Innenwand des Steckerbereiches 15 und/oder an dessen Frontseite gebildet sein. Beide Varianten sind in Figur 1 angedeutet.

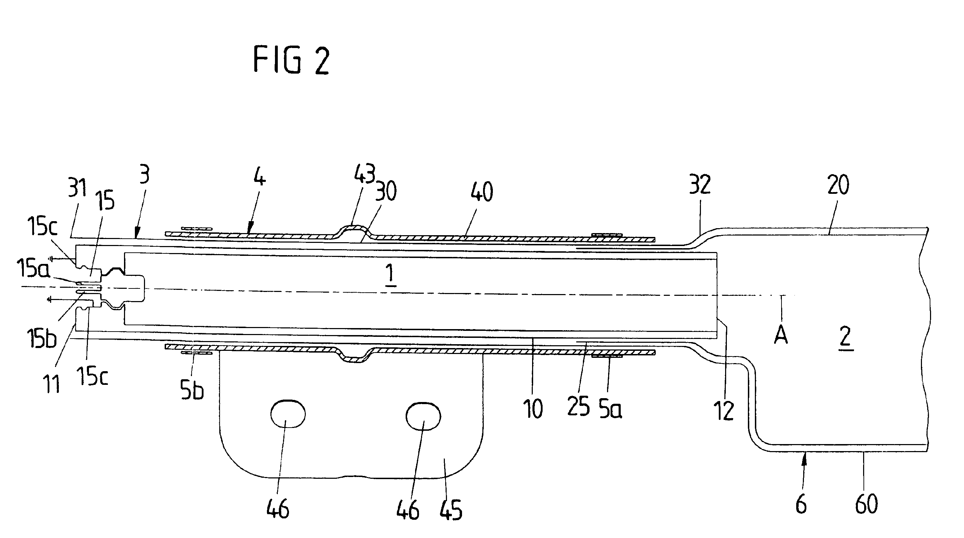

In Figur 2 ist eine Abwandlung des Ausführungsbeispiels aus Figur 1 dargestellt, wobei ein Unterschied darin besteht, dass gemäß Figur 2 der Gassack 2 im zu einem Gassackpaket zusammengefalteten bzw. zusammengerafften Zustand von einer durch eine Folie 60 gebildeten Umhüllung 6 umgeben ist. Diese hält den Gassack 2 im zu einem Paket zusammengestauchten Zustand und erleichtert somit das Verstauen des Gassackes 2 in einem Kraftfahrzeug.

Beim Aufblasen des Gassackes 2 in einem Crash-Fall, indem der von der Gassackhülle 20 umgebene Innenraum des Gassackes 2 mit Gas befüllt wird, wobei der Gassack 2 sich entfaltet, reist die durch die Folie 60 gebildete Umhüllung 6 auf, so dass der Gassack 2 aus der Umhüllung 6 austreten und ein zum Schutz eines Fahrzeuginsassen dienendes Gaskissen bilden kann.

Ein weiterer Unterschied zu dem in Figur 1 gezeigten Ausführungsbeispiel besteht bei der Generatorbaugruppe aus Figur 2 darin, dass die zur Isolierung des Gasgenerators 1 gegenüber benachbarten Bauteilen dienende flexible Schutzhülle 30 nicht durch einen Fortsatz des in einem Crash-Fall zu einem Gaskissen aufblasbaren Gassackes 2 sondern vielmehr durch einen Fortsatz 3 der den Gassack 2 in zusammengestauchtem Zustand umgebenden Umhüllung 6 gebildet wird. D. h., der Fortsatz 3 ist mit der jene Umhüllung 6 bildenden Folie 60 (einstückig) verbunden, so dass er bevorzugt ebenfalls als Folienteil ausgebildet ist, und steht von jener Folie 60 in Richtung auf den Gasgenerator 2 ab. Dabei ist an der zweiten stirnseitigen Deckfläche 32 der flexiblen Hülle 30 ein Übergangsbereich zu der Umhüllung 6 des Gassackes 2 bzw. genauer zu der diese Umhüllung 6 bildenden Folie 60 ausgebildet.

Der Gassack 2 bzw. die Gassackhülle 20 umgibt in diesem Fall den Gasgenerator 1 lediglich abschnittsweise im Bereich von dessen dem Gassack 2 zugewandter stirnseitiger Deckfläche 12 mit einem Einblasmund 25 des Gassackes 2.

Die vorstehend beschriebene elektrische Isolation des Gasgenerators 1 gegenüber benachbarten Bauelementen ist unabhängig davon, ob es sich hierbei um einen Heißgasgenerator handelt, der bei Zündung aus einem Stoffgemisch (chemisch) heiße Gase zum Aufblasen des Gassackes 2 erzeugt, oder um einen Kaltgasgenerator, der bei Zündung ein bereits im Gasgenerator gespeichertes Gas zum Aufblasen des Gassackes 2 freisetzt, oder um einen so genannten Hybrid-Gasgenerator, der sowohl ein gespeichertes, zum Aufblasen des Gassackes 2 freisetzbares Kaltgas als auch ein zur Erzeugung zusätzlicher Heißgase dienendes Stoffgemisch enthält.

## Patentansprüche

1. Generatorbaugruppe für ein Airbagmodul eines Kraftfahrzeugs, mit
- einem Gasgenerator (1) zum Aufblasen eines Gassackes des Airbagmodules mit Gas, wobei der Gasgenerator (1) mit seinem Generatorgehäuse (10) eine Mantelfläche definiert, die sich zwischen einer ersten und einer zweiten stirnseitigen Deckfläche (11, 12) des Gasgenerators (1) erstreckt, und
- Mitteln zur elektrischen Isolierung des Gasgenerators gegenüber angrenzenden Bauelementen, wobei zur elektrischen Isolierung des Gasgenerators eine flexible Materiallage (30) vorgesehen ist, die die Mantelfläche des Gasgenerators (1) vollständig bedeckt,
**dadurch gekennzeichnet,**
**dass** eine gezielte, definierte Erdung des Gasgenerators (1) über eine Erdungsleitung erfolgt, die an einen in einen Steckerbereich (15) des Gasgenerators (1) integrierten elektrischen Anschluss (15c) des Gasgenerators (1) angeschlossen ist.

2. Generatorbaugruppe nach Anspruch 1, **dadurch gekennzeichnet, dass** die flexible Materiallage (30) den Gasgenerator (1) als flexible Hülle entlang der Umfangsrichtung umschließt, wobei die flexible Hülle (30) insbesondere einen Hohlzylinder definiert und sich insbesondere zwischen zwei einander gegenüberliegenden, jeweils eine Deckfläche bildenden Stirnseiten (31, 32) erstreckt, von denen zumindest eine Deckfläche (31) offen ist.

3. Generatorbaugruppe nach einem der vorhergehenden Ansprüche, **dadurch gekennzeichnet, dass** sich der Gasgenerator (1) entlang einer Achse (A) erstreckt.

4. Generatorbaugruppe nach Anspruch 3, **dadurch gekennzeichnet, dass** sich die flexible Materiallage (30) in Richtung der Generatorachse (A) im Wesentlichen entlang der gesamten Länge (I) des Gasgenerators (1) erstreckt.

5. Generatorbaugruppe nach einem der vorhergehenden Ansprüche, **dadurch gekennzeichnet, dass** die flexible Materiallage (30) beim Aufblasen des Gassackes (2) ihre räumliche Lage vor der ihr zugewandten Außenseite des Gasgenerators (1) beibehält.

6. Generatorbaugruppe nach einem der vorhergehenden Ansprüche, **dadurch gekennzeichnet, dass** die flexible Materiallage (30) durch einen Abschnitt (3) des Gassackes (2), insbesondere durch einen Fortsatz der Gassackhülle (20) gebildet wird.

7. Generatorbaugruppe nach Anspruch 6, **dadurch gekennzeichnet, dass** die flexible Materiallage (30) zusammen mit der Gassackhülle (20) einen Hohlraum definiert, dessen einer Hohlraumbereich von der Gassackhülle (20) umschlossen ist und beim Aufblasen des Gassackes (2) mit Gas befüllt wird und dessen anderer Hohlraumbereich von der flexiblen Materiallage (30) umschlossen ist und von dem Gasgenerator (1) im Wesentlichen vollständig ausgefüllt ist.

8. Generatorbaugruppe nach einem der Ansprüche 1 bis 5, **dadurch gekennzeichnet, dass** die flexible Materiallage (30) als eine von der Gassackhülle (20) separate Komponente ausgebildet ist.

9. Generatorbaugruppe nach einem der vorhergehenden Ansprüche, **dadurch gekennzeichnet, dass** der Gassack (2) vor dem Aufblasen zu einem Gassackpaket zusammengestaucht und von einer Umhüllung (6) umgeben ist.

10. Generatorbaugruppe nach Anspruch 9, **dadurch gekennzeichnet, dass** die flexible Materiallage (30) durch einen Abschnitt (3) der Umhüllung (6) des Gassackes (2) gebildet wird.

11. Generatorbaugruppe nach einem der vorhergehenden Ansprüche, **dadurch gekennzeichnet, dass** die Umhüllung (6) des Gassackes (2) und/oder die flexible Materiallage (30) aus einem Folienmaterial bestehen.

12. Generatorbaugruppe nach einem der vorhergehenden Ansprüche, **dadurch gekennzeichnet, dass** die Gassackhülle (20) und/oder die flexible Materiallage (30) aus einem Gewebe bestehen.

13. Generatorbaugruppe nach einem der vorhergehenden Ansprüche, **dadurch gekennzeichnet, dass** dem Gasgenerator (1) eine Halteeinrichtung (4) zugeordnet ist, mit der der Gasgenerator (1) an einem zugeordneten Kraftfahrzeugteil fixierbar ist.

14. Generatorbaugruppe nach einem der vorhergehenden Ansprüche, **dadurch gekennzeichnet, dass** an den Steckerbereich (15) eine elektrische Verbindungsleitung anzuschließen ist, um den Gasgenerator (1) elektrisch auslösen zu können, so dass er ein Gas zum Aufblasen des Gassackes (2) freisetzt.

15. Generatorbaugruppe nach einem der vorhergehenden Ansprüche, **dadurch gekennzeichnet, dass** der elektrische Anschluss (15c) in elektrischem Kontakt mit einem metallischen Gehäuse (10) des Gasgenerators (1) steht.

## Claims

1. Generator assembly for an airbag module of a motor vehicle, comprising
- a gas generator (1) for inflating an airbag of an airbag module with gas, wherein the gas generator (1) defines with its generator housing (10) a lateral surface that extends between a first and a second frontal cover surface (11, 12) of the gas generator (1), and
- means for electrically insulating the gas generator with respect to adjacent parts, wherein for electrical insulation of the gas generator (1) a flexible material layer (30) is provided that completely covers the lateral surface of the gas generator (1).
**characterized in that,**
a systematic, defined grounding of the gas generator (1) via a grounding conductor is carried out which is connected to an electrical connection (15c) of the gas generator (1) that is integrated into a connector area (15) of the gas generator (1).

2. Generator assembly according to claim 1, **characterized in that** the flexible material layer (30) in the form of a flexible covering encloses the gas generator (1) along the circumferential direction, wherein the flexible covering (30) particularly defines a hollow cylinder and extends between two opposing front faces each defining a cover surface (31, 32), wherein at least one of the two cover surfaces (31, 32) is an open cover surface (31).

3. Generator assembly according to one of the preceding claims, **characterized in that** the gas generator (1) extends along an axis (A).

4. Generator assembly according to claim 3, **characterized in that** the flexible material layer (30) extends in the direction of the generator axis (A) essentially along the entire length (I) of the gas generator (1).

5. Generator assembly according to one of the preceding claims, **characterized in that** upon inflation of the airbag (2) the flexible material layer (30) retains its spatial position in front of the outer side of the gas generator (1) facing the flexible material layer (30).

6. Generator assembly according to one of the preceding claims, **characterized in that** the flexible material layer (30) is formed by a section (3) of the airbag (2), particularly by an extension of the airbag covering (20).

7. Generator assembly according to claim 6, **characterized in that** the flexible material layer (30) defines a hollow space together with the airbag covering (20) having a hollow space area that is enclosed by the airbag covering (20) and is filled with gas upon inflation of the airbag (2) and which other hollow space area is enclosed by the flexible material layer (30) and is essentially completely filled by the gas generator (1).

8. Generator assembly according to one of the claims 1 to 5, **characterized in that** the flexible material layer (30) is formed as a separate component with respect to the airbag covering (20).

9. Generator assembly according to one of the preceding claims, **characterized in that** the airbag (2) is compressed to form an airbag package prior to inflation and is surrounded by a casing (6).

10. Generator assembly according to claim 9, **characterized in that** the flexible material layer (30) is formed by a section (3) of the casing (6) of the airbag (2).

11. Generator assembly according to one of the preceding claims, **characterized in that** the casing (6) of the airbag (2) and/or the flexible material layer (30) consist of a film material.

12. Generator assembly according one of the preceding claims, **characterized in that** the airbag covering (20) and/or the flexible material layer (30) consist of a fabric.

13. Generator assembly according to one of the preceding claims, **characterized in that** a retaining device is associated to the gas generator (1) by means of which the gas generator (1) can be fixed to an associated motor vehicle part.

14. Generator assembly according to one of the preceding claims, **characterized in that** an electrical connecting conductor is to be connected to the connector area (15) in order to be able to electrically activate the gas generator (1) so that the gas generator (1) discharges gas for inflating the airbag (2).

15. Generator assembly according to one of the preceding claims, **characterized in that** the electrical connection (15c) stands in electrical contact to a metallic housing (10) of the gas generator (1).

## Revendications

1. Sous-ensemble générateur pour un module coussin gonflable d'un véhicule automobile, comportant
- un générateur de gaz (1), pour gonfler un coussin gonflable du module coussin gonflable avec du gaz, le générateur de gaz (1), avec son carter de générateur (10), définissant une surface latérale, qui s'étend entre une première et une deuxième faces frontales (11, 12) du générateur de gaz (1), et
- des moyens pour l'isolement électrique du générateur de gaz par rapport aux composants adjacents, une couche de matériau souple (30), qui recouvre complètement la surface latérale du générateur de gaz (1), étant prévue pour l'isolement électrique du générateur de gaz,
**caractérisé en ce qu'**une mise à la terre ciblée et parfaitement définie du générateur de gaz (1) est réalisée par l'intermédiaire d'une conduite de mise à la terre, qui est raccordée à une borne électrique (15c) du générateur de gaz (1), intégrée dans une zone de prise (15) du générateur de gaz (1).

2. Sous-ensemble générateur selon la revendication 1, **caractérisé en ce que** la couche de matériau souple (30) entoure le générateur de gaz (1) sous forme d'une enveloppe souple dans la direction périphérique, l'enveloppe souple (30) définissant en particulier un cylindre creux, et s'étendant en particulier entre deux côtés frontaux (31, 32), opposés l'un à l'autre, et formant chacun une face, et dont au moins une face (31) est ouverte.

3. Sous-ensemble générateur selon l'une des revendications précédentes, **caractérisé en ce que** le générateur de gaz (1) s'étend le long d'un axe (A).

4. Sous-ensemble générateur selon la revendication 3, **caractérisé en ce que** la couche de matériau souple (30) s'étend dans la direction de l'axe du générateur (A) pour l'essentiel le long de toute la longueur (L) du générateur de gaz (1).

5. Sous-ensemble générateur selon l'une des revendications précédentes, **caractérisé en ce que** la couche de matériau souple (30) conserve, lors du gonflement du coussin gonflable (2), sa position spatiale devant le côté extérieur du générateur de gaz (1), le côté extérieur étant dirigé vers la couche de matériau souple (30).

6. Sous-ensemble générateur selon l'une des revendications précédentes, **caractérisé en ce que** la couche de matériau souple (30) est formée par un segment (3) du coussin gonflable (2), en particulier par un prolongement de l'enveloppe (20) du coussin gonflable.

7. Sous-ensemble générateur selon la revendication 6, **caractérisé en ce que** la couche de matériau souple (30) définit, ensemble avec l'enveloppe (20) du coussin gonflable, un espace creux, dont l'une des cavités est entourée de l'enveloppe (20) du coussin gonflable et est remplie de gaz lors du gonflement du coussin gonflable (2), et dont l'autre cavité est entourée de la couche de matériau souple (30) et est pour l'essentiel complètement remplie par le générateur de gaz (1).

8. Sous-ensemble générateur selon l'une des revendications 1 à 5, **caractérisé en ce que** la couche de matériau souple (30) est configurée comme un composant distinct de l'enveloppe (20) du coussin gonflable.

9. Sous-ensemble générateur selon l'une des revendications précédentes, **caractérisé en ce que** le coussin gonflable (2) est, avant le gonflement, aplati pour former un paquet de coussin gonflable, et est entouré d'une enveloppe (6).

10. Sous-ensemble générateur selon la revendication 9, **caractérisé en ce que** la couche de matériau souple (30) est formée par un segment (3) de l'enveloppe (6) du coussin gonflable (2).

11. Sous-ensemble générateur selon l'une des revendications précédentes, **caractérisé en ce que** l'enveloppe (6) du coussin gonflable (2) et/ou la couche de matériau souple (30) sont constitués d'un matériau en feuille.

12. Sous-ensemble générateur selon l'une des revendications précédentes, **caractérisé en ce que** l'enveloppe (20) du coussin gonflable et/ou la couche de matériau souple (30) sont constitués d'un tissu.

13. Sous-ensemble générateur selon l'une des revendications précédentes, **caractérisé en ce qu'**un dispositif de maintien (4), à l'aide duquel le générateur de gaz (1) peut être fixé à une pièce de véhicule automobile qui lui est attribué, est attribué au générateur de gaz (1).

14. Sous-ensemble générateur selon l'une des revendications précédentes, **caractérisé en ce qu'**une conduite de liaison électrique est à raccorder à la zone de prise (15), pour pouvoir déclencher électriquement le générateur de gaz (1), de façon à libérer un gaz destiné au gonflement du coussin gonflable (2).

15. Sous-ensemble générateur selon l'une des revendications précédentes, **caractérisé en ce que** le raccordement électrique (15c) est en contact électrique avec un carter métallique (10) du générateur de gaz (1).
